# EUROPEAN PATENT APPLICATION

(11) **EP 4 580 019 A1**
(43) Date of publication of application: **02.07.2025**
(21) Application number: 24222629.8
(22) Date of filing: 20.12.2024
(51) Int. Cl.: H02M 1/00, H02M 3/28, H02M 7/487

(54) **RADIATION TOLERANT HIGH VOLTAGE DC POWER DISTRIBUTION SYSTEMS AND METHOD**

(30) Priority: 28.12.2023 US 202318398828
(71) Applicant: Hamilton Sundstrand Space Systems International, Inc., Windsor Locks, CT 06096 (US)
(72) Inventor: CHANNEGOWDA, Parikshith, Marlborough, 06447 (US); DWARI, Suman, Vernon, 06066 (US); RIAR, Baljit, Arlington, 22209 (US); FUTRELL, Michael Anthony, Rockford, 61114 (US)
(74) Representative: Dehns

(57) **Abstract**

An alternating current to direct current (AC to DC) power converter assembly that converts a plurality of low voltage alternating current (AC) inputs into a high voltage DC power output. The converter (240) includes two or more AC to DC power converters (202), each of the two or more AC to DC power converters including: a low power AC power input configured to receive an AC input from a low power AC power source (102); and a low power DC power output. The converter also includes two or more isolated DC to DC power converters (204), each DC to DC power converter electrically coupled at least one of the AC to DC power converters, wherein each DC to DC power converter includes an output and wherein each of the DC to DC power converters are connected in series to produce the high power DC power output.

## Description

### BACKGROUND

Exemplary embodiments of the present disclosure pertain to the art of power distribution and, in particular, to power distribution using radiation tolerant components.

As NASA return the moon, one part of the plan is to create a lunar base to house humans on the moon. Such a base will require that power be generated on the moon. As the base becomes larger, so will the power demands. This growing demand will create challenges both in getting the means of power generation to the moon as well as transmitting the power from where it is generated to the base.

One approach is to provide a high voltage DC power distribution network. Such a network will include a power source and transmission lines as well as power converters to allow for long distance power distribution.

### BRIEF DESCRIPTION

Disclosed is an alternating current to direct current (AC to DC) power converter assembly that converts a plurality of low voltage alternating current (AC) inputs into a high voltage DC power output. The AC to DC power converter includes: two or more AC to DC power converters, each of the two or more AC to DC power converters including: a low power AC power input configured to receive an AC input from a low power AC power source; and a low power DC power output; and two or more isolated DC to DC power converters, each DC to DC power converter electrically coupled at least one of the AC to DC power converters, wherein each DC to DC power converter includes an output and wherein each of the DC to DC power converters are connected in series to produce the high power DC power output.

In addition to one or more of the features described above, or as an alternative to any of the foregoing embodiments, each DC to DC power converter can be directly connected to a respective one of the two or more AC to DC power converters.

In addition to one or more of the features described above, or as an alternative to any of the foregoing embodiments, the system can further include an internal DC bus and the low power DC power output of each of the two or more AC to DC power converters can connected in parallel to the internal DC bus.

In addition to one or more of the features described above, or as an alternative to any of the foregoing embodiments, each of the two or more DC to DC power converters can be connected in parallel to the internal DC bus.

In addition to one or more of the features described above, or as an alternative to any of the foregoing embodiments, each of the two or more AC to DC power converters can be an active inverter.

In addition to one or more of the features described above, or as an alternative to any of the foregoing embodiments, the active inverter of each of the two or more AC to DC power converters can include solid state semiconductor switching devices.

In addition to one or more of the features described above, or as an alternative to any of the foregoing embodiments, the switching devices can be built with gallium nitride (GaN) or silicon (Si) semiconductor material.

In addition to one or more of the features described above, or as an alternative to any of the foregoing embodiments, the switching devices can be radiation hardened switching devices.

In addition to one or more of the features described above, or as an alternative to any of the foregoing embodiments, the active inverter can be one of a uni-directional three or greater level active neutral point clamped inverter; or a bi-directional three or greater level active neutral point clamped inverter.

In addition to one or more of the features described above, or as an alternative to any of the foregoing embodiments, the two or more DC to DC converters can be isolated converters.

In addition to one or more of the features described above, or as an alternative to any of the foregoing embodiments, the DC to DC converters can be series connected Dual active half bridge converters, series connected dual active full bridge converters or three level dual active full bridge converters.

Also disclosed is a high power direct current (DC) power supply. The supply includes: two or more low power AC power sources; and an alternating current to direct current (AC to DC) power converter assembly that converts power received from the two or more low power AC power sources a high power DC power output. The power converter assembly includes: two or more AC to DC power converters, each of the two or more AC to DC power converters including: a low power AC power input connected to a respective one of the two or more low power AC power sources; and a low power DC power output; and two or more DC to DC power converters, each DC to DC power converter electrically coupled at least one of the AC to DC power converters, wherein each DC to DC power converter includes an output and wherein each of the DC to DC power converters are connected in series to produce the high power DC power output.

The high power direct current (DC) power supply can be combined with a high voltage DC power network.

In addition to one or more of the features described above, or as an alternative to any of the foregoing embodiments, the low power AC power sources can be generators.

In addition to one or more of the features described above, or as an alternative to any of the foregoing embodiments, each DC to DC power converter is directly connected to a respective one of the two or more AC to DC power converters.

In addition to one or more of the features described above, or as an alternative to any of the foregoing embodiments, the AC to DC power converter assembly can further include an internal DC bus. The low power DC power output of each of the two or more AC to DC power converters are connected in parallel to the internal DC bus.

In addition to one or more of the features described above, or as an alternative to any of the foregoing embodiments, each of the two or more DC to DC power converters can be connected in parallel to the internal DC bus.

### BRIEF DESCRIPTION OF THE DRAWINGS

The following description and drawings should not be considered limiting in any way. With reference to the accompanying drawings, like elements are numbered alike:
FIG. 1 is an example lunar power distribution system;
FIG. 2 is an example AC to DC power conversion assembly;
FIGs. 3a to 3d show example low power AC to DC converter topologies;
FIGs. 4a to 4d show example DC to DC converter topologies; and
FIG. 5 is another example AC to DC power conversion assembly.

### DETAILED DESCRIPTION

A detailed description of one or more embodiments of the disclosed apparatus and method is presented herein by way of exemplification and not limitation with reference to the Figures.

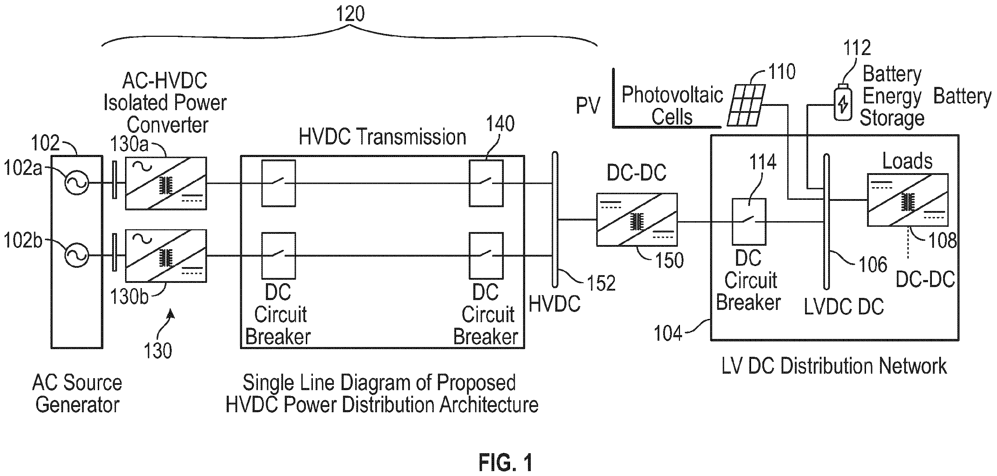

As noted above, power generation and transmission on the moon is essential for lunar base feasibility. FIG. 1 shows an example system 100 that can be used to generate and distribute power on the moon. The system 100 can include a power generation source 102. The source 102 can generate AC power in one embodiment. Examples of such a source can include nuclear power generator. The source can include multiple AC sources 102b, 102b..... (e.g., AC generators) that can provide AC power either on separate busses as shown or on a common bus. These sources can each provide low voltage multiphase AC power. Herein low voltage is defined as less than 500V rms line-line, and multiphase AC is defined as including single phase AC.

The power can be delivered to a base station or location power distribution location 104. As shown, the station 104 includes a station DC bus 106 that delivers low voltage DC power to one or more DC loads 108. Herin low voltage DC power is defined as per state-of-art space power industry standard which is less than 200V average. For generalization, the loads 108 are shown as DC to DC converters that the loads can include further power level adjustments as needed but the conversion is not required. It should be understood that the station DC bus 106 can be outside of the station 104 without departing from the scope of the present disclosure. In addition, the station DC bus 106 can also receive power from sources such as solar panels 110. The power from the solar panels 110 or from the source 102 can be stored in one or more batteries 112 connected to the bus 106 as needed. Further, in the event that the source is not supplying power, the batteries 112 can provide power to the station 104. For completeness, the station 106 can also include a breaker 114 to disconnect from the source 102 if needed.

The system also includes a DC power transmission system 120. The DC power transmission 120 can deliver high voltage DC power in one embodiment Herein, high voltage DC is defined being as above 1000V average). The power can be, for example, greater than 40KW in one embodiment.

The DC power transmission system 120 can include an AC to DC converter section 130 and transmission network 140. The network 140 can be a formed of cables 142 and can include one or circuit breakers 142. The network 140 generally allows for the long-distance DC power transmission to connect the source 102 to the station 104. To achieve long distance DC power transmission, the voltage provided to the network needs to be high. The high voltage DC power can be stepped down by a DC to DC converter 150 in one embodiment. The network 140 is shown as including multiple cable 142a, 142b for redundancy but that is not required. Further, to the extend multiple cables 142a, 142b, the network 142 can provide the power to a high voltage DC bus 152 before being provided to the DC to DC converter 150.

As noted above, the source 102 can include multiple sources 102a, 102b that can be AC sources. As noted below, these sources can be low voltage AC sources. The converter section 130 of FIG. 1 converts the low voltage AC power of the sources 102a, 102b into high voltage DC power and can include one or more AC to DC converters 130a, 130b.... These power conversion stages such as AC to HVDC and HVDC to LVDC exist in terrestrial applications. The lunar radiation environment is especially challenging for high voltage conversion - either AC or DC. The power converter stages described herein operate reliably in the harsh radiation environment of the lunar surface.

In particular, converting from AC to DC can require active rectification. Active rectification with fully controlled semiconductor switches (e.g. MOSFETs) is more efficient, more compact and generates less harmonics compared to passive rectification with uncontrolled or partially controlled semiconductor switches (e.g. Diodes, Thyristors). To that end, active switching elements (e.g., semiconductor transistors) can be required. All electronics equipment operating in extraterrestrial environments - such as low earth orbit, deep space or lunar surface are subjected to cosmic radiation which consist of high energy charged particles or photons. This radiation has a negative effect on semiconductor based electronics, causing random single event effects (SEE) that degrade the switching devices.

The requirement to use cosmic radiation-hardened or radiation tolerant semiconductor switching devices limits to the selection pool to Gallium Nitride (GaN) and Silicon (Si) semiconductor switching devices as such devices can survive and operate in the harsh radiation environments of lunar and orbit environment. However, these devices have limitations (e.g., low reverse blocking voltage capacity, low forward conduction current capacity, limited power rating and scalability) that make them less suitable for use in power conversion stages that convert low voltage (AC or DC) to high voltage. Embodiments disclosed herein provide for power converter topologies that overcome these limitations of GaN or Si devices.

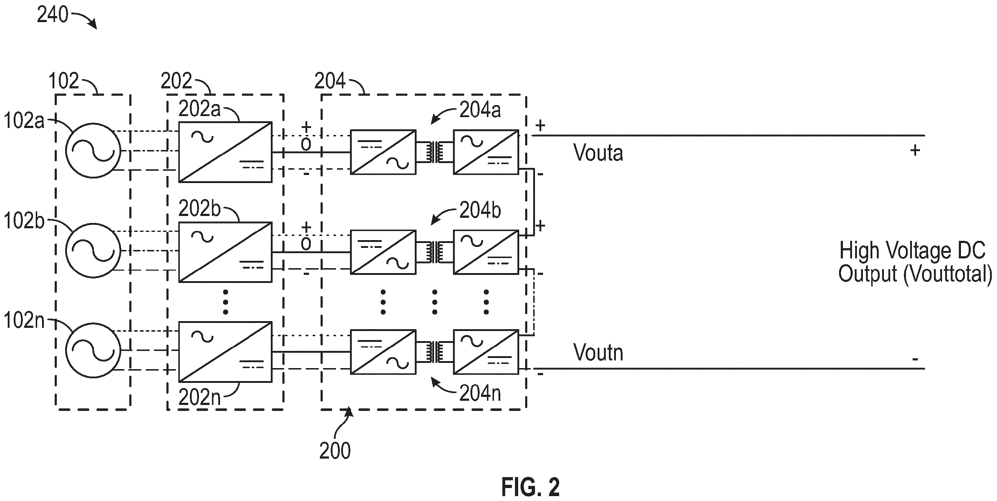

With reference now to FIG. 2, an example low voltage multiphase AC to high voltage DC converter 200 that can be, for example, any of the converters 130a, 130b etc. shown in FIG. 1. Each of the power conversion stages shown in Fig 2 (202, 204) are designed to operate in environments such a lunar environment or space environments.

The power converter 200, in general, converts low voltage multiphase AC (here defined as less than 500Vrms line-line) to high voltage DC (here defined higher than 1000V average) in one embodiment. As more fully discussed below, the converter 200 includes active rectifiers (202a, 202b etc.) that convert from the received power from each multiphase AC source 102a, 102b from AC to DC. The power converter stage 204 (204a, 204b, etc.) then boosts the DC voltage using an isolated power conversion DC-DC topology for each source.

The output of each DC to DC converter stage (204a, 204b etc) is Vouta, Voutb etc. These outputs are connected in series to an adjacent DC to DC converter and the resulting high voltage DC (Vout = Vouta+Voutb+...) is transmitted via the network 140 described above. Such an architecture can support either support bidirectional power flow (LVAC to HVDC and HVDC to LVAC) or unidirectional power flow (LVAC to HVDC) depending on specific topology implementations of the power converter stages 202 and 204. All embodiments utilize radiation tolerant switching devices and the complete design 240 overcome the voltage limitations of current state-of-art radiation-tolerant semiconductor switching devices to provide HVDC from LVAC sources.

In FIG. 2, the power converter 200 includes an AC to DC conversion portion 202 and a DC boost section 204. In more detail, the AC to DC conversion section 202 includes one or more AC to DC converters 202a ... 202n. The AC to DC converters 202a ... 202n can be formed as active rectifiers that include solid state switches therein. The switches can be GaN switches, Si switches, or a combination of GaN and Si switches in embodiments disclosed herein. The AC to DC converters 202a ... 202n can convert low voltage AC power (less then 500 VRMS line to line) to DC. Each AC to DC converter 202a ... 202n can be connected to a respective AC power sources (e.g., generators) 102a ... 102n.

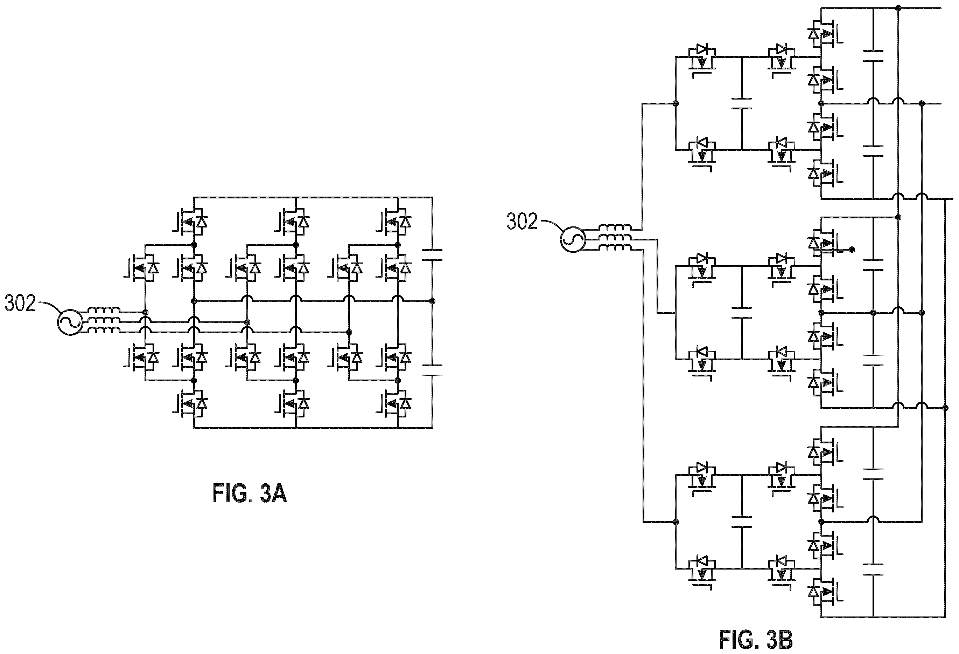

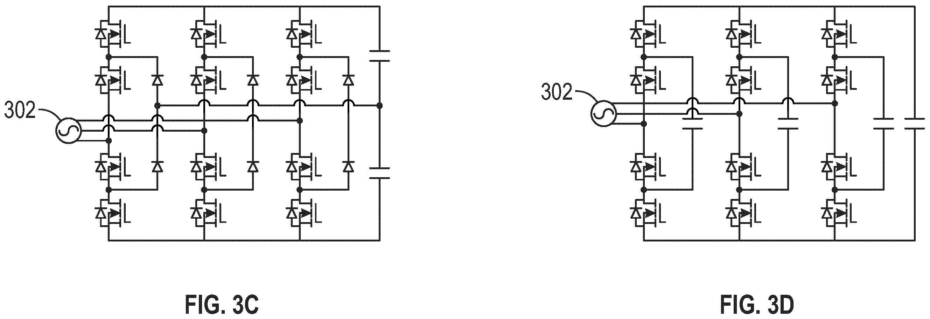

The AC to DC converters 202a ... 202n can be either bi-directional or unidirectional. FIGs. 3a and 3b show example configurations of a bi-directional inverters. In particular, FIG. 3a shows a bi-directional three level active neutral point clamped inverter connected to an AC source 102 and FIG. 3b shows a bi-directional five level active neutral point clamped inverter connected to a low voltage AC power source 302 (e.g., a generator) such as sources 102a ... 102n of FIG. 2. FIGs. 3c and 3d show example configurations of a uni-directional inverters. In particular, FIG. 3c shows a bi-directional three level capacitor clamped inverter connected to an AC source 102 and FIG. 3c shows a uni-directional three level active neutral point clamped inverter connected to an AC source 102.

All of the examples include solid state switches. While three and five level inverters are shown, it shall be understood that any level switch (e.g., 1 or three or greater) can be used herein. Further, other topologies such a Vienna rectifier topology could be utilized.

The DC boost section 204 includes isolated DC to DC converters 204a ... 204n. In FIG. 2, each DC to DC converters 204a ... 204n is directly connected to a respective AC to DC converters 202a ... 202n. The DC to DC converters 204a ... 204n is isolated as indicated by the inclusion of transformer. In one embodiment, the turns ratio of the DC to DC converters 204a ... 204n is such that they operate as a boost converter to convert low voltage DC at the output of the AC to DC converters 202a ... 202n to a higher voltage. The boosted voltage is shown as Vouta ... Voutn. The outputs are connected in series as indicated to create a high voltage DC output (Vouttotal) that is the sum of outputs of each of the DC to DC converters 204a ... 204n. That is, the negative rail of one of the DC to DC converters (e.g,. 204a) is connected to a positive rail of the next/adjacent DC to DC converter (e.g., 204b) and so on unit the last converter (eg., 204n) is reached. Thus, Vouttotal is between the positive rail of DC to DC converter 204a and the negative rail of DC to DC converter 204n.

The serial connection allows for low power electronics to be used in the AC to AC converters and the DC to DC converters while sill allowing for the production of a high enough DC voltage (Vouttotal) for long distance transmission.

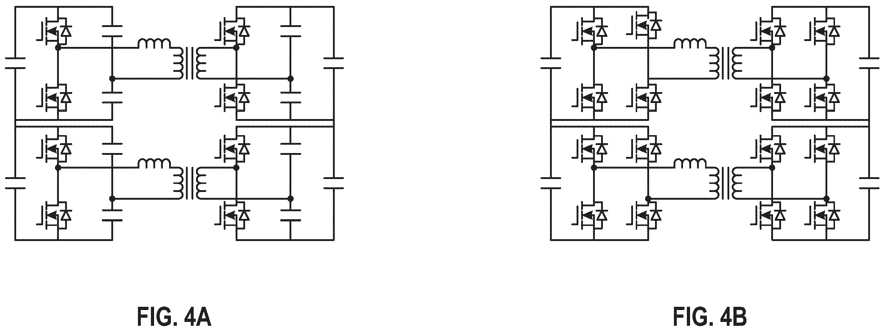

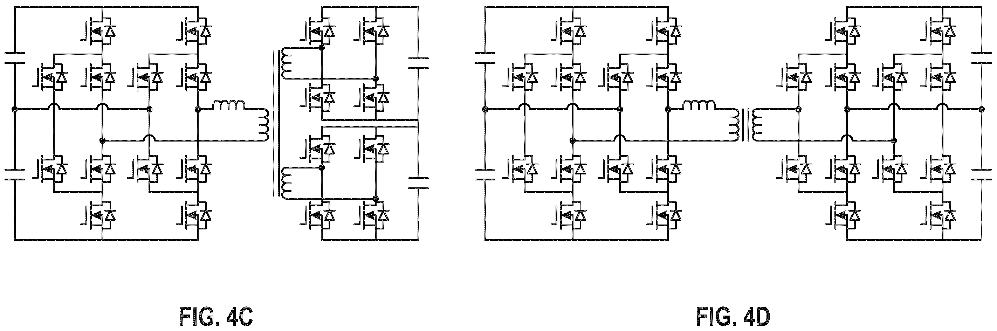

The DC to DC converters 204a ... 204n can be any type of isolating converters. Examples include two series connected dual active half bridge DC to DC isolated converters (FIG. 4a), a series connected Dual Active Full Bridde DC-DC Isolated converter (FIG. 4b), a Three level Dual Active Bridge primary, Dual Active Bridge Secondary DC-DC Isolated converter (FIG. 4c) and a three level dual Active bridge DC-DC Isolated converter (FIG. 4D).

With reference again to FIG. 2, in one embodiment, a controller 280 can be provided to actively control the switches in either or both of the AC to DC converters 202a ... 202n and the DC to DC converters 204a ... 204n. This can be true in any embodiment herein.

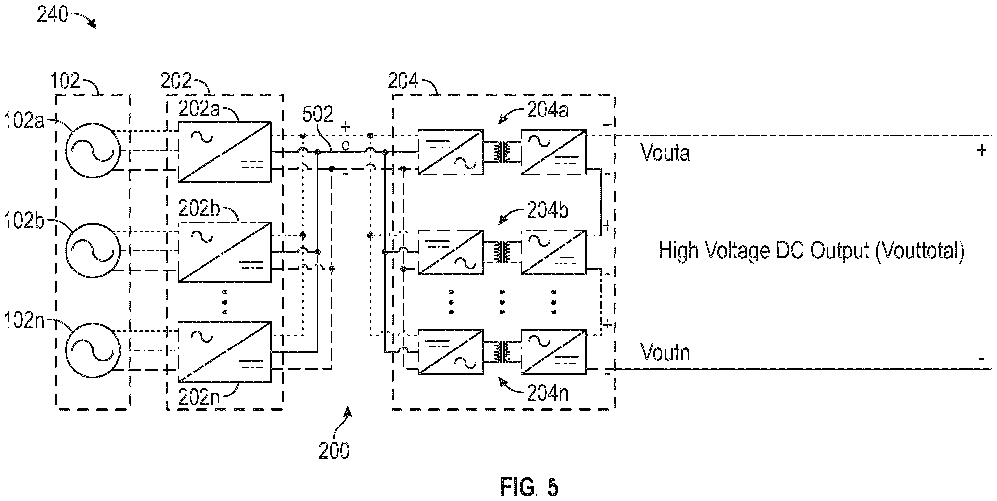

In the prior example, each AC to DC converter 202a ... 202n was direction connected to a respective DC to DC converters 204a ... 204n. This connection is not meant to be limiting. For example, the converter 200 could include an internal bus 502 as shown in FIG. 5. The output of each AC to DC converter 202a ... 202n is connected in parallel to each the internal bus 502. The input of each DC to DC converters 204a ... 204n is connected in parallel to each bus. The system works as discussed above. In comparison to Fig 2, the arrangement in Fig. 5 allows mutual power sharing of AC sources using the common rectified DC bus. This arrangement also allows for repair and refurbishment of individual AC sources (102a,102b...) without disrupting power output from the remaining sources or the HVDC output..

Of course, embodiments herein can include both the converter 200 connected to the power sources 102 or can be limited to the power converter 200 itself. In addition, embodiments can include the power converters 200 connected to a network such as network 140.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present invention as defined by the appended claims. In addition, many modifications may be made to adapt a particular situation or material to the teachings disclosed herein without departing from the essential scope of the invention. Therefore, it is intended that the present disclosure not be limited to the particular embodiment(s) disclosed in the description and drawings, but that the scope of protection will include all embodiments falling within the scope of the appended claims.

## Claims

1. An alternating current to direct current (AC to DC) power converter assembly that converts a plurality of low voltage alternating current (AC) inputs into a high voltage DC power output, the AC to DC power converter comprising:
two or more AC to DC power converters, each of the two or more AC to DC power converters including: a low power AC power input configured to receive an AC input from a low power AC power source; and a low power DC power output; and
two or more isolated DC to DC power converters, each DC to DC power converter electrically coupled at least one of the AC to DC power converters, wherein each DC to DC power converter includes an output and wherein each of the DC to DC power converters are connected in series to produce the high power DC power output.

2. The AC to DC power converter assembly of claim 1, wherein each DC to DC power converter is directly connected to a respective one of the two or more AC to DC power converters.

3. The AC to DC power converter assembly of claim 1 or 2, further comprising an internal DC bus;
wherein the low power DC power output of each of the two or more AC to DC power converters are connected in parallel to the internal DC bus.

4. The AC to DC power converter of claim 3, wherein each of the two or more DC to DC power converters are connected in parallel to the internal DC bus.

5. The AC to DC power converter assembly of any preceding claim, wherein each of the two or more AC to DC power converters is an active inverter.

6. The AC to DC power converter assembly of claim 5, wherein the active inverter of each of the two or more AC to DC power converters includes solid state semiconductor switching devices.

7. The AC to DC power converter assembly of claim 6, wherein the switching devices are built with gallium nitride (GaN) or silicon (Si) semiconductor material.

8. The AC to DC power converter assembly of claim 6 or 7, wherein the switching devices are radiation hardened switching devices.

9. The AC to DC power converter assembly of any of claims 6 to 8, wherein the active inverter is one of a uni-directional three or greater level active neutral point clamped inverter; or a bi-directional three or greater level active neutral point clamped inverter.

10. The AC to DC power converter assembly of any preceding claim, wherein the two or more DC to DC converters are isolated converters.

11. The AC to DC power converter assembly of claim 10, wherein the DC to DC converters are series connected Dual active half bridge converters, series connected dual active full bridge converters or three level dual active full bridge converters.

12. A high power direct current (DC) power supply comprising:
two or more low power AC power sources; and
an alternating current to direct current (AC to DC) power converter assembly according to any one of claims 1 to 11.

13. The DC power source of claim 12, in combination with a high voltage DC power network.

14. The DC power source of claim 12 or 13, wherein the low power AC power sources are generators.
